# EUROPEAN PATENT SPECIFICATION

(11) **EP 0 313 391 B1**
(45) Date of publication and mention of the grant of the patent: **22.03.1995**
(21) Application number: 88309928.5
(22) Date of filing: 21.10.1988
(51) Int. Cl.: H04N 3/185

(54) **High voltage power supply for video apparatus**
Hochspannungsversorgung für Videogeräte
Alimentation en haute tension pour des appareils vidéo

(30) Priority: 23.10.1987 GB 8724891; 06.06.1988 US 202359
(43) Date of publication of application: 26.04.1989
(73) Proprietor: RCA Thomson Licensing Corporation, Princeton, NJ 08540 (US)
(72) Inventor: Haferl, Peter Eduard, CH-8134 Adliswil (CH)
(74) Representative: Pratt, Richard Wilson

(56) References cited:
- DE-A- 3 043 801
- US-A- 4 645 990
- PATENT ABSTRACTS OF JAPAN, vol. 3, no. 86 (E-125), 24th July 1979;& JP-A-54 64 417

## Description

This invention relates to a power supply for a video apparatus, e.g. television apparatus or video display apparatus.

In television receiver or monitor circuits, the ultor accelerating potential or high voltage for a picture tube is typically derived by rectifying a retrace pulse voltage developed in a high voltage winding of a horizontal output flyback transformer. The retrace pulse voltage is developed by a horizontal deflection circuit output stage that is coupled to the high voltage winding via the primary winding of the flyback transformer. The horizontal deflection circuit output stage comprises a horizontal deflection winding, a retrace capacitor and a trace switch, comprising a damper diode and a horizontal output transistor.

In typical television receiver circuits, raster size is inversely proportional to the square root of the ultor accelerating potential. Because the high voltage circuit exhibits a certain amount of source impedance, increasing the load current drawn from the ultor terminal will result in a decreased ultor accelerating potential. Ultor voltage variations resulting from variation of beam current occur mainly due to a leakage inductance between the high voltage and the primary winding of the flyback transformer. Ultor voltage variations lead to reduced performance. The reduced performance is manifested by undesirable raster size variations, reduced peak brightness and poor focus at high beam currents.

In one prior art arrangement, raster width variations are compensated by supplying an energizing voltage via a resistor across which a beam current dependent voltage drop develops. The resistor is coupled to the primary winding of the flyback transformer. Compensation is possible because the raster width variations are directly proportional to variations of the energizing voltage that is applied across the primary winding, which determines the deflection current amplitude, but are proportional only to the square root of the variations of the high voltage retrace pulse. Disadvantageously, in such arrangements the voltage drop across the resistor further reduces the high voltage at high beam currents, resulting in a focus voltage and an ultor voltage that are not at optimal levels.

In another prior arrangement disclosed in JP-A-54-64417 a high voltage regulator adds a regulating pulse voltage to the deflection retrace voltage input to a high voltage rectifier. The regulation is provided by varying the phase of the added pulse voltage relative to the deflection retrace voltage. There is a danger under certain conditions that the peaks of the two pulses may coincide resulting in loss of control of the regulation.

Because of the advent of, for example, very large picture tubes having increased resolution and high definition, it may be desirable to have a better stabilized or regulated ultor voltage so as to obtain better display performance over the entire beam current or brightness range. It may be further desirable to have the ultor voltage adjustable to the maximum permissible value, taking into account the x-radiation limit, to obtain high brightness at low beam current and, therefore, a better spot size.

According to the present invention, there is provided a high voltage power supply of a video apparatus, comprising: a source of an input signal at a frequency that is related to a deflection frequency; a flyback resonant circuit; first switching means responsive to said input signal and coupled to said flyback resonant circuit for generating a periodic, resonant first flyback voltage that is developed across a high voltage winding of a flyback transformer; a second resonant circuit; second switching means responsive to a control signal and coupled to said second resonant circuit for generating at a first terminal of said high voltage winding a periodic, resonant second flyback voltage at a controllable phase relative to said first flyback voltage that is applied in series with said first flyback voltage such that a high voltage pulse is developed at a second terminal of said high voltage winding having an amplitude that varies in accordance with said phase; and a control circuit for generating said control signal to vary the phase of said second flyback voltage relative to that of said first flyback voltage; said control circuit operating in a negative feedback mode when the amplitude-phase characteristic of said high voltage pulse is ascending and said control circuit operating in a positive feedback mode when said amplitude-phase characteristic of said high voltage pulse is descending; characterized in that said control circuit comprises means responsive to said second flyback voltage and to said first flyback voltage for generating a signal that limits the range of said controllable phase to prevent said negative feedback from changing to positive feedback.

In the drawing:
FIGURE 1 illustrates a horizontal deflection circuit with ultor voltage stabilization, embodying an aspect of the invention;
FIGURE 2a-2f and 3a-3i illustrate waveforms useful in explaining the operation of the circuit of FIGURE 1; and
FIGURE 4 illustrates a second embodiment of the invention that includes a protection circuit.

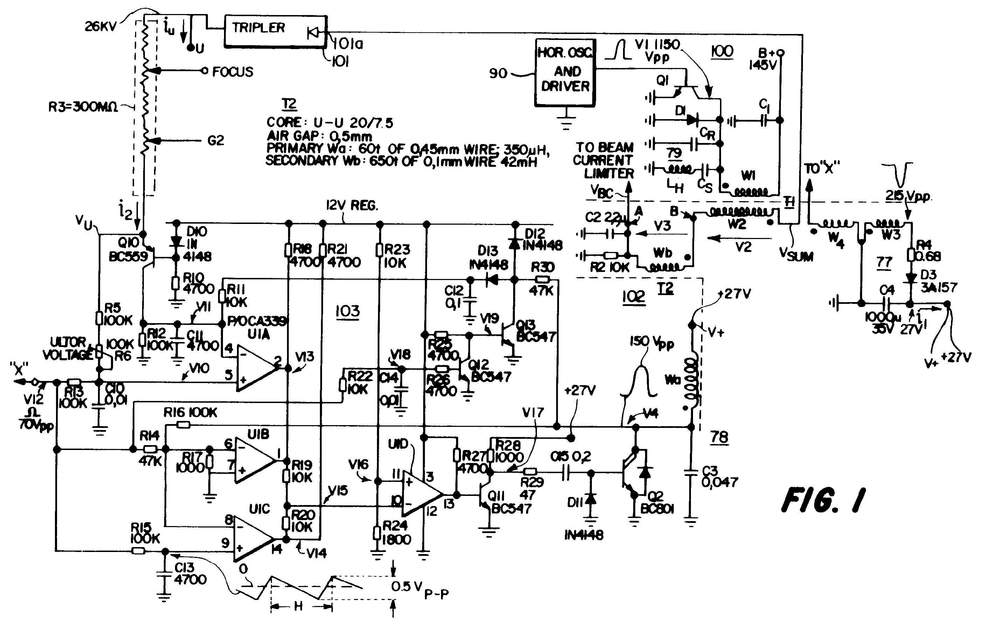

FIGURE 1 illustrates a horizontal deflection circuit 100 and a high voltage stabilization circuit 102 that generates a stabilized ultor voltage U, embodying an aspect of the invention. The circuits of FIGURE 1 may be used in conjunction with, for example, a 110°, 27˝ 45AX color display system, not shown. For simplicity, east-west raster correction, horizontal linearity correction and component values, which are not relevant for explaining the invention, are omitted from FIGURE 1.

High voltage stabilization circuit 102 includes a switching Darlington transistor Q2, a stabilization retrace capacitor C3 and a primary winding Wa of a transformer T2. Transformer T2 has a secondary winding Wb for developing a stabilization retrace or flyback voltage V3 between terminals A and B. Winding Wb is coupled at terminal B in series with a high voltage winding W2 of a flyback transformer T1.

A switching transistor Q1 of deflection circuit 100, responsive to a horizontal rate drive signal from horizontal oscillator and driver 90, generates a horizontal rate retrace voltage V1 in a deflection retrace or flyback resonant circuit 79 that is coupled via a primary winding W1 of transformer T1 to winding W2 to form a horizontal rate retrace or flyback high voltage V2 in winding W2. Winding W2 is coupled to a conventional voltage tripler 101 that generates an ultor voltage U in accordance with the sum of retrace voltages V2 and V3.

Circuit 102 is energized by a supply voltage V+, obtained, for example, from a power supply arrangement 77. Arrangement 77 includes a winding W3 of transformer T1, a resistor R4 and a diode D3. Diode D3 conducts during trace. Voltage V+ may also be used, for example, to energize a vertical deflection circuit, not shown.

A beam current sampling resistor R2 and a parallel coupled capacitor C2 are coupled between terminal A of winding Wb and ground. Consequently, a beam current dependent negative voltage V_{BC} is developed across resistor R2 at terminal A which serves as an input to a beam current limiter, not shown. Voltage variations of voltage V_{BC} at terminal A are, for example, between zero Volts and 15 Volts. Consequently, voltage V_{BC} at terminal A has no appreciable influence on stabilization circuit 102 and, therefore, is not referred to in the description that follows.

Stabilization circuit 102 operates as an energy flywheel. When transistor Q2 is conductive, an increasing ramp current i₁ flows through winding Wa and stores energy in winding Wa. When transistor Q2 is switched off, the stored energy is transferred into stabilization retrace capacitor C3 and develops a retrace voltage V4 across capacitor C3 and across winding Wa that forms with capacitor C3 a stabilization retrace resonant circuit 78. Voltage V4 is transformer coupled to winding Wb and appears as voltage V3 across winding Wb that is in series with voltage V2.

A control circuit 103 of stabilization circuit 102 provides base drive that controls the turn-off timing of transistor Q2 at a horizontal frequency f_{H} having a variable phase relative to that of the base drive of transistor Q1. The phase varies in accordance with a current i₂ that flows in a bleeder resistor R3 that is indicative of the level of ultor voltage U. Bleeder resistor R3 provides a focus voltage and a Grid 2 voltage to the picture tube, not shown. The peak voltage at an input terminal 101a of voltage tripler 101, that generates ultor voltage U, is substantially equal to the peak value of the sum of retrace voltages V2 and V3. The peak voltage of stabilization voltage is controlled by control circuit 103.

In accordance with another aspect of the invention, ultor voltage U is held constant by a negative feedback loop of control circuit 103. Control circuit 103 varies the phase of voltage V4 and, hence, that of stabilization retrace voltage V3 with respect to horizontal retrace voltage V1, hence also with respect to retrace voltage V2.

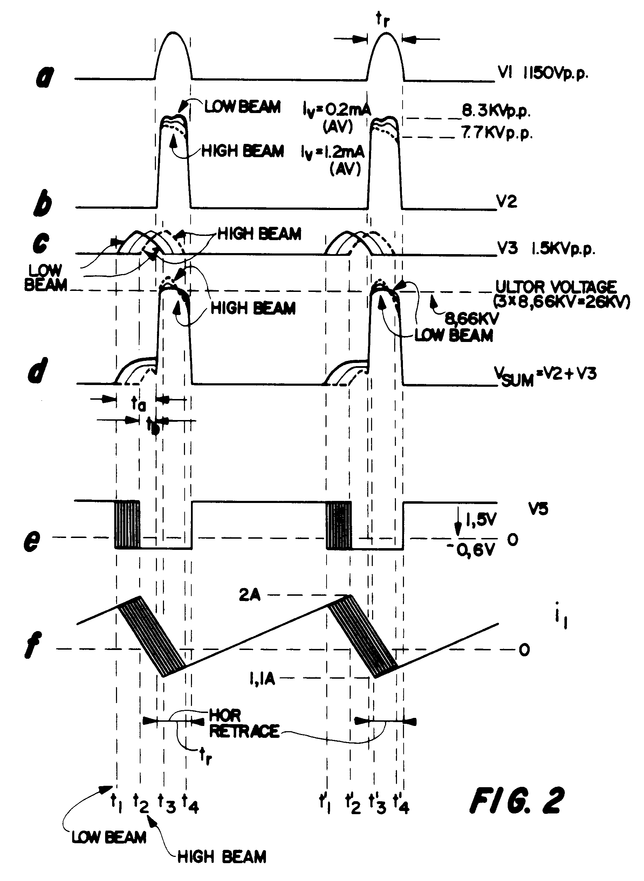

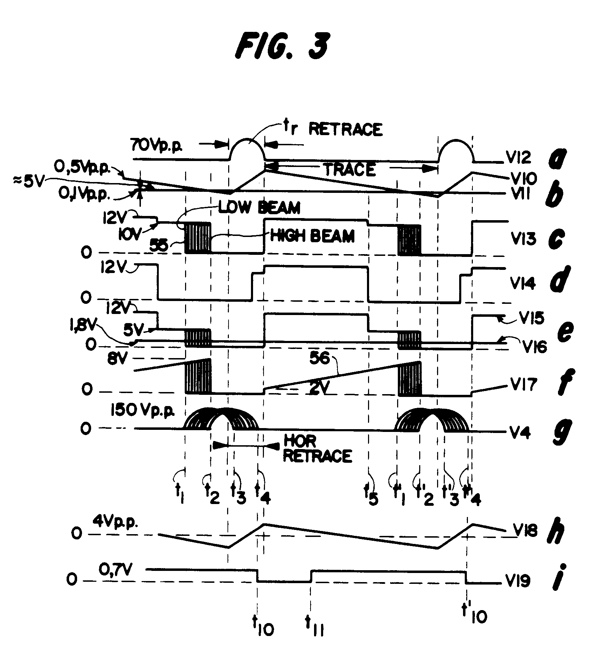

FIGURE 2a-2f and 3a-3i illustrate waveforms useful for explaining the operation of the circuit of FIGURE 1. Similar symbols and numerals in FIGURES 1, 2a-2f and 3a-3i indicate similar items or functions.

FIGURE 2c illustrates the phase relation of voltages V3 and V2 as a function of beam current. The phase of voltage V3 is advanced relative to that of voltage V2, by a time interval, depicted as ta, at low beam current. The low beam current is, illustratively, 0.2 ma, on the average. The phase advance, tb, of stabilization retrace voltage V3 is smaller at high beam current, that is, illustratively, 1.2 ma, on the average.

FIGURE 2d illustrates a waveform representing the sum of the instantaneous values of retrace voltages V2 and V3. Voltage V3 adds only 0,36 KV to voltage V2 at low beam current to form a voltage V_{SUM} that is applied to terminal 101a of tripler 101. In comparison, the decreased phase advance at high beam current causes retrace voltage V3 to add 0.96 kV to voltage V2. The phase of voltage V3 of FIGURE 2c is modulated in the range, t₁-t₂, that is illustratively, 8 microseconds.

In carrying out a preferred feature of the invention, control circuit 103 shifts the phase of retrace voltage V3 of FIGURE 2c in a way that causes current i₂ in resistor R3 of FIGURE 1 to remain substantially constant when the beam current varies.

It should be understood that the invention may be embodied in a control circuit that is similar to control circuit 103 but which produces stabilization retrace voltage V3 with a phase lag, instead of phase advance, relative to voltage V2.

In FIGURE 2d the level of ultor voltage U is shown relative to the peak of the sum of voltages V2 and V3. The high beam envelope of the sum of voltages V2 and V3 of FIGURE 2d is higher than ultor voltage U. The sum of the voltages is higher because of the voltage drop across the diodes, not shown, of tripler 101 of FIGURE 1, causing an averaging effect of the peak voltage during retrace. The peak forward current i₁ of FIGURE 2f that is coupled to winding Wa of FIGURE 1 is higher at high beam currents because more energy is necessary to regulate ultor voltage U.

Energy is always circulating in circuit 102. Therefore, when the displayed raster suddenly changes from dark to peak white, the already circulating energy is advantageously, rapidly transferred to winding Wb by immediately retarding the turn-off instant of transistor Q2. Likewise, the energy flow may be interrupted very quickly by the capability of immediately advancing the turnoff instant of transistor Q2. This feature significantly improves the white window or white bar response of the display, not shown in the FIGURES.

The ratio between a variation of ultor voltage U to the corresponding beam current variation is conventionally referred to as the high voltage output impedance. To measure the output impedance, the beam current is changed, for example, from 0.2 mA to 1.2 mA. The measured drop in ultor voltage U is then divided by the beam current difference, that is 1 mA, in the example.

In a conventional deflection circuit, using the same flyback transformer T1, that does not include an arrangement such as circuit 102, a drop of 2kV was measured, corresponding to an output impedance of 2 megohms. In comparison, in the circuit of FIGURE 1, using the same flyback transformer T1, the variation of ultor voltage U was, advantageously, reduced to 200 Volts, corresponding to an output impedance of 0.2 megohms. Advantageously, this lower source impedance resulted in a visible improvement of the displayed raster. In particular, the improvement occurs in focus, spot size and resolution capability at high beam currents.

Circuit 102 of FIGURE 1 may also be adapted to operate with a flyback transformer utilized in an arrangement of the diode split type. In such case, a voltage analogous to voltage V2 may have to be three times higher and a corresponding flyback transformer may then require a winding with three times more turns to obtain the required peak voltage.

A retrace interval of voltage V4, for example, between time t₁ and t₃ of FIGURE 3g is designed to be longer than that of a deflection retrace interval tᵣ of voltage V1 of FIGURE 2a or of voltage V12 of FIGURE 3a. For example, the deflection retrace time tᵣ may be 11.6 microseconds, corresponding to retrace resonance frequency of 44 kHz. In contrast, the retrace time t₁ -t₃ of voltage V4 of FIGURE 3g may be 16 microseconds, corresponding to retrace resonance frequency of 31 kHz. This provides a lower source output impedance across winding Wb of FIGURE 1 that supplies voltage V3; hence, the regulation characteristic is smoother or more gradual because the rate of change of voltage V3 is lower than that of voltage V2.

In control circuit 103, bleeder resistor R3 is coupled to the emitter of a transistor Q10 that is coupled as a common base amplifier. The base of transistor Q10 is biased with a DC voltage of approximately +12 volts that is coupled via a diode D10. Diode D10 provides temperature compensation to the emitter-base junction voltage variations of transistor Q10.

Current i₂ in resistor R3, which is proportional to ultor voltage U, is separated into a first portion that is substantially unaffected by variations of ultor voltage U. The first portion flows through resistors R5, R6, and R13 and, via a winding W4, to ground. A second portion of current i₂ that varies with ultor voltage U, flows through transistor Q10 and produces, at an inverting input terminal of a comparator U1A and across a resistor R12, a voltage V11.

Advantageously, by biasing the base of transistor Q10 with approximately +12 volts, the portion of current i₂ that flows through resistor R12, that does not vary with variation of voltage U, may be reduced without reducing the error voltage amplitude. Thus, resistor R12 can be high in value to obtain high amplitude error voltage with low average DC value. Low average DC value is desirable for operating within the input voltage range of comparator U1A.

Adjustment of resistor R6 that controls ultor voltage U changes voltages V10 and V11 at the respective input terminals of comparator UIA in an opposite or differential manner. The more current flowing through resistors R5, R6, and R13, the less current flows through resistor R12, and vice versa. The two current paths of current i₂ form an impedance coupled in series with bleeder resistor R3. Resistor R6 is adjusted to obtain the required DC levels of voltages V10 and V11 of FIGURE 3b.

Unmodulated retrace voltage V12 of FIGURE 1, developed across winding W4 of transformer T1, produces a horizontal sawtooth voltage component of voltage V10 across a capacitor C10 with a constant amplitude that is coupled to the noninverting input terminal of comparator U1A. Comparator U1A causes a falling edge 55 of FIGURE 3c of a modulated voltage V13 of FIGURE 1 to occur. Edge 55 of FIGURE 3c, that occurs at a crossover of voltages V11 and V10, determines the turn-off instant of transistor Q2 of FIGURE 1 that may vary within the range t₁ -t₂ of FIGURE 3c. The time or phase modulation of edge 55 of voltage V13 is determined according to error voltage V11 of FIGURE 3b, which varies in a voltage range of approximately 100 millivolts over the variation range of ultor voltage U and of the beam current.

A comparator U1B of FIGURE 1 that is responsive to unmodulated voltage V12 maintains voltage V13 at zero volts until just after time t₄ at the end of the horizontal retrace of FIGURE 3c. Comparator U1B of FIGURE 1 is also controlled by retrace voltage V4 that is coupled via a resistor R16. Comparator U1B prevents transistor Q2 from being turned on prior to the trailing edge of retrace voltage V4 of FIGURE 3g.

A comparator U1C of FIGURE 1 is controlled by a horizontal sawtooth waveform that is developed across a capacitor C13. Consequently, a voltage V14 of FIGURE 3d is produced by comparator U1C of FIGURE 1 and summed with voltage V13 to form a voltage V15. Voltage V15 limits the modulation range to prevent it from occurring earlier than time t₅ of FIGURES 3c, 3d and 3e. Voltage V15 is compared with a constant DC threshold determining voltage V16 in a comparator U1D. Comparator U1D controls the operation of a driver transistor Q11.

Beam current variations cause ultor voltage U to vary that, in turn, causes collector current in transistor Q10 also to vary, accordingly. The result is a time modulation of edge 55 of voltage V13 of FIGURE 3c. Consequently, the turn-on time of transistor Q11 of FIGURE 1 is also phase modulated. When transistor Q11 is turned on, a phase modulated voltage V17 at the collector of transistor Q11 becomes zero at a controllable phase that occurs in the range t₁-t₂ of FIGURE 3f. The turn-on instant of transistor Q11 of FIGURE 1 causes the turn-off of transistor Q2.

In accordance with a further aspect of the invention, the turn-off instant of transistor Q2 controls the timing or phase of stabilization retrace voltage V3 of FIGURE 2c relative to that of retrace resonant voltage V2 of FIGURE 2b. A change in beam current causes the sum of retrace voltages V2 and V3 of FIGURE 2d to vary as a result of the phase change in a negative feedback manner that stabilizes ultor voltage U.

Voltage V17 of FIGURE 3f at the collector of driver transistor Q11 of FIGURE 1 has an upramping portion 56 of FIGURE 3f caused by a capacitor C15 of FIGURE 1 which is charged during the conduction time of transistor Q2. Capacitor C15 is discharged during the cut-off interval of transistor Q2 via a diode D11 and via transistor Q11.

Assume, hypothetically, an extremely high beam current load which then, delays or shifts to the right of FIGURE 3g the trailing edge of retrace voltage V4 so as to overlap with the trace period OF VOLTAGE V12 of FIGURE 3a. In such a case, the peak of voltage V4 of FIGURE 3g may occur nearly coincidentally with the peak of voltage V12 of FIGURE 3a or of voltage V2 of FIGURE 2b. Consequently, control circuit 103 of FIGURE 1, operating normally as a negative feedback loop, might, under such extremely high beam load current, function as a positive feedback loop that might cause it to latch. To prevent such latching, a transistor Q13 is switched to cut-off by the turn-on of a transistor Q12 during interval t₁₀ -t₁₁ of FIGURE 3i.

A horizontal sawtooth voltage V₁₈ of FIGURE 3h that controls the turn-on time of transistor Q12 is produced by a delay network that includes a resistor R22 and a capacitor C14 of FIGURE 1 that is responsive to voltage V12. Interval t₁₀-t₁₁ is determined by the timing of the portion of voltage V₁₈ that is more positive than the forward voltage of the base-emitter junction of transistor Q12.

If the trailing edge of voltage V4 happens to appear during interval t₁₀ -t₁₁ transistor Q13 will be in cutoff and will enable voltage V4 to charge a capacitor C12 via a resistor R30 that is coupled to the collector of transistor Q2 and via a diode D13. Therefore, the voltage in capacitor C12 that is coupled to comparator U1A via a resistor R11 will cause an increase in error voltage V11 and, in turn, an advance or a pull back to the left of retrace voltage V4 of FIGURE 3g. In this way, the aforementioned latching condition is prevented from occurring. Thus, transistors Q12 and Q13 operate as a modulation range limiter.

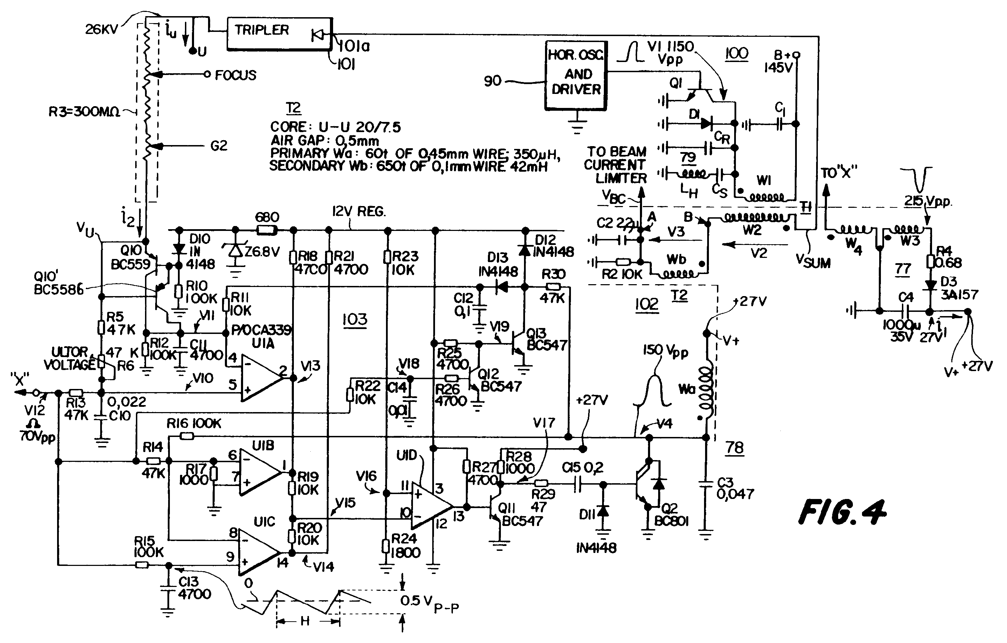

FIGURE 4 illustrates a second embodiment of the invention. Similar numeral and symbols in FIGURES 1 and 4 illustrate similar items or functions. In FIGURE 4 diode D10 is coupled to a zener diode that develops a 6.8 volt voltage at the anode of diode D10. A transistor Q10′ has an emitter electrode that is coupled to the base of transistor Q10. The base of transistor Q10′ is coupled to the emitter of transistor Q10. The collector of transistor Q10′ is coupled to the collector of transistor Q10.

Protection against a defective or disconnected bleeder resistor R3 is provided by transistor Q10′ which is in cutoff during normal operation. When the current flowing through bleeder resistor R3 falls below 2/3 of its nominal value, transistor Q10 turns off and transistor Q10′ is turned on. The current flowing through transistor Q10′ charges capacitor C11, causing a fast increase of error voltage V11. This shifts the leading edge of voltage V₄ to a time that is analogous to time t₅ of FIGURE 3g that is outside the control range.

## Claims

1. A high voltage power supply of a video apparatus, comprising:
a source (90) of an input signal at a frequency that is related to a deflection frequency;
a flyback resonant circuit (79);
first switching means (Q1) responsive to said input signal and coupled to said flyback resonant circuit for generating a periodic, resonant first flyback voltage (V2) that is developed across a high voltage winding (W2) of a flyback transformer (T1);
a second resonant circuit (78);
second switching means (Q2) responsive to a control signal (V17) and coupled to said second resonant circuit (78) for generating at a first terminal (B) of said high voltage winding (W2) a periodic, resonant second flyback voltage (V3) at a controllable phase relative to said first flyback voltage (V2) that is applied in series with said first flyback voltage (V2) such that a high voltage pulse (V_{SUM}) is developed at a second terminal (101a) of said high voltage winding (W2) having an amplitude that varies in accordance with said phase; and
a control circuit (103) for generating said control signal (V17) to vary the phase of said second flyback voltage (V3) relative to that of said first flyback voltage (V2); said control circuit (103) operating in a negative feedback mode when the amplitude-phase characteristic of said high voltage pulse (V_{SUM}) is ascending and said control circuit (103) operating in a positive feedback mode when said amplitude-phase characteristic of said high voltage pulse (V_{SUM}) is descending;
characterized in that said control circuit (103) comprises means (Q12,Q13) responsive to said second flyback voltage (V3) and to said first flyback voltage (V2) for generating a signal (V19) that limits the range of said controllable phase to prevent said negative feedback from changing to positive feedback.

2. A high voltage power supply according to Claim 1 characterized by, rectifier means (101) having an input terminal (101a) that is coupled to said high voltage pulse for generating a rectified high voltage that is coupled to a load circuit, wherein said control circuit (103) is responsive to said rectified high voltage for varying said phase of said second flyback voltage (V3) in a negative feedback manner that stabilizes said rectified high voltage with current variation in said rectifier means (101).

3. A high voltage power supply according to Claim 1 characterized in that said flyback resonant circuit (79) comprises a horizontal deflection winding (L_{H}) and a flyback capacitance (C_{R}).

4. A high voltage power supply according to Claim 3 characterized in that said flyback transformer (T1) comprises a primary winding (W1) that is coupled to said flyback resonant circuit (79) and wherein said high voltage winding comprises a tertiary winding (W2) of said flyback transformer.

5. A power supply according to Claim 1 characterized in that the resonant frequency of said second resonant circuit (78) is lower than that of said flyback resonant circuit (79).

6. A power supply according to Claim 1 characterized in that said control circuit (103) comprises means (Q10,C10) responsive to said first flyback voltage (V2) for generating a sawtooth signal (V10) having a constant phase relative to said input signal, and means (U1A) responsive to said sawtooth signal (V10) and to said high voltage pulse for generating said control signal (V17) having a corresponding controllable phase that varies in accordance with said high voltage pulse.

7. A power supply according to Claim 1 characterized in that the phases of said first (V2) and second (V3) flyback voltages are at least partially overlapping.

8. A power supply according to Claim 1 characterized in that said flyback resonant circuit (79) comprises a deflection winding (L_{H}) and wherein said control signal (V17) has a corresponding controllable phase that causes said phase of said second flyback voltage (V3) to lead that of said first flyback voltage (V2) over an entire regulation range of said power supply.

9. A power supply according to Claim 1 characterized in that said control circuit (103) includes means (R13,C10) responsive to said first flyback voltage (V2) for generating a sawtooth signal (V10) having a ramping portion (V10), and means (U1A) responsive to said ramping portion (V10) and to said high voltage pulse to form a first transition edge of said control signal when a crossover, of said ramping portion (V10) and of a signal (V11) that is representative of a level of said high voltage pulse, occurs that controls the relative phase between said first (V2) and second (V3) flyback voltages.

10. A power supply according to Claim 9 characterized in that said second switching means comprises a transistor switch (Q2) having a control electrode (base) that is coupled to said control signal (V17) and a main current conducting electrode (emitter) that is coupled to said second resonant circuit (78), and wherein said transition edge causes said transistor switch (Q2) to become nonconductive, to cause a flyback interval to occur in said second flyback voltage (V3).

11. A power supply according to Claim 9 characterized in that said control circuit (103) includes means (R22,C14) coupled to said flyback resonant circuit (79) for generating a signal that is time shifted relative to said first flyback voltage (V2), said range limiting means (Q12,Q13) responsive to said time shifted signal and to said second flyback voltage for generating a third signal when at least a portion of said second flyback voltage occurs during the occurrence of said time shifted signal, said third signal being coupled to said first transition edge generating means (U1A) for varying the timing of said first transition edge to prevent said control circuit (103) from operating in a positive feedback mode.

12. A power supply according to Claim 1 characterized in that said first (V2) and second (V3) flyback voltages are produced in windings (W2,Wb) that are magnetically separated to produce said high voltage pulse (V_{SUM}) in accordance with a sum of said first (V2) and second (V3) flyback voltages.

13. A power supply according to Claim 1 characterized in that said high voltage winding (W2) of said flyback transformer (T1) is magnetically coupled to said flyback resonant circuit (79), a winding (Wb) of a second flyback transformer (T2) is magnetically coupled to said second resonant circuit (78), and said windings (W2,Wb) of said first (T1) and second (T2) flyback transformers are coupled in series to produce via a terminal (101a) of one of said windings, that is coupled to an input terminal of a high voltage rectifier (101), a rectified high voltage at an output terminal of said rectifier (101).

14. A power supply according to Claim 13 characterized in that said flyback resonant circuit (79) comprises a deflection winding (L_{H}), a second winding (W3) of said flyback transformer (T1) is coupled to a second rectifier (D3) that generates an energizing voltage (V+), said energizing voltage being coupled via a winding (Wa) of said second flyback transformer (T2) to a main current conducting electrode (collector) of a switching transistor (Q2) that is included in said second switching means.

15. A power supply according to Claim 1 characterized by a rectifier (101) coupled to said high voltage pulse (V_{SUM}) for generating a rectified high voltage (U), and third means (D10,Q10) having a first terminal (emitter) that is coupled to said rectified high voltage (U) through an impedance (R3) such that a current (i₂) that flows via said impedance (R3) in said first terminal is indicative of said rectified high voltage and for generating at a second terminal (collector) of said third means a signal (V11) that is indicative of said rectified high voltage having an average value that is level shifted by said third means (D10,Q10) relative to a voltage (V_{U}) that is developed at said first terminal (emitter) of said third means.

16. A power supply according to Claim 15 characterized in that said third means comprises a transistor (Q10) having an emitter electrode that is coupled through a bleeder resistance (R3) to said rectified high voltage (U) and having a base electrode at a constant voltage level for maintaining substantially constant a voltage that is developed at said emitter electrode thereof when said rectified high voltage changes, and wherein said level shifted signal is generated at a collector electrode thereof.

## Patentansprüche

1. Hochspannungsversorgung für ein Videogerät, umfassend:
eine Quelle (90) für ein Eingangssignal mit einer Frequenz, die auf eine Ablenkfrequenz bezogen ist;
eine Rücklauf-Resonanzschaltung (79);
erste auf das Eingangssignal ansprechende und mit der Rücklauf-Resonanzschaltung verbundene Schaltmittel (Q1) zur Erzeugung einer periodischen ersten Resonanz-Rücklaufspannung (V2), die an einer Hochspannungswicklung (W2) eines Zeilenendtransformators (T1) erzeugt wird;
eine zweite Resonanzschaltung (78);
zweite auf ein Steuersignal (V17) ansprechende und mit der zweiten Resonanzschaltung (78) verbundene Schaltmittel (Q2), um an einem ersten Anschluß (B) der Hochspannungswicklung (W2) eine periodische zweite Resonanz-Rücklaufspannung (V3) mit einer steuerbaren Phase relativ zu der ersten Rücklaufspannung (V2) zu erzeugen, die derart in Reihe mit der ersten Rücklaufspannung (V2) zugeführt wird, daß ein Hochspannungsimpuls (V_{SUM}) an einem zweiten Anschluß (101a) der Hochspannungswicklung (W2) aufgebaut wird, dessen Amplitude sich mit der genannten Phase ändert; und
eine Steuerschaltung (103) zur Erzeugung des Steuersignals (V17), um die Phase der zweiten Rücklaufspannung (V3) relativ zu der der ersten Rücklaufspannung (V2) zu ändern; wobei die Steuerschaltung (103) in einem negativen Rückkopplungsbetrieb arbeitet, wenn die Amplituden-Phasencharakteristik des Hochspannungsimpulses (V_{SUM}) ansteigt, und wobei die Steuerschaltung (103) in einem positiven Rückkopplungsbetrieb arbeitet, wenn die Amplituden-Phasencharakteristik des Hochspannungsimpulses (V_{SUM}) abfällt;
dadurch gekennzeichnet, daß die Steuerschaltung (103) Mittel (Q12, Q13) umfaßt, die auf die zweite Rücklaufspannung (V3) und auf die erste Rücklaufspannung (V2) ansprechen, um ein Signal (V19) zu erzeugen, das den Bereich der steuerbaren Phase begrenzt, un zu verhindern, daß sich die negative Rückkopplung in eine positive Rückkopplung ändert.

2. Hochspannungsversorgung nach Anspruch 1, gekennzeichnet durch Gleichrichtermittel (101) mit einem Eingangsanschluß (101a), dem der Hochspannungsimpuls zugeführt wird, um eine gleichgerichtete Hochspannung zu erzeugen, die einer Lastschaltung zugeführt wird, wobei die Steuerschaltung (103) auf die gleichgerichtete Hochspannung anspricht, um die Phase der zweiten Rücklaufspannung (V3) in einer negativen Rückkopplungsweise zu ändern, die die gleichgerichtete Hochspannung bei Stromänderung in den Gleichrichtermitteln (101) stabilisiert.

3. Hochspannungsversorgung nach Anspruch 1, dadurch gekennzeichnet, daß die Rücklauf-Resonanzschaltung (79) eine Horizontal-Ablenkwicklung (L_{H}) und eine Rücklauf-Kapazität (C_{R}) enthält.

4. Hochspannungsversorgung nach Anspruch 3, dadurch gekennzeichnet, daß der Zeilenendtransformator (T1) eine Primärwicklung (W1) enthält, die mit der Rücklauf-Resonanzschaltung (79) verbunden ist, und daß die Hochspannungswicklung eine tertiäre Wicklung (W2) des Zeilenendtransformators ist.

5. Hochspannungsversorgung nach Anspruch 1, dadurch gekennzeichnet, daß die Resonanzfrequenz der zweiten Resonanzschaltung (78) niedriger als die der Rücklauf-Resonanzschaltung (79) ist.

6. Hochspannungsversorgung nach Anspruch 1, dadurch gekennzeichnet, daß die Steuerschaltung (103) Mittel (Q10, C10) enthält, die auf die erste Rücklaufspannung (V2) ansprechen, um ein Sägezahnsignal (V10) zu erzeugen, das eine konstante Phase relativ zum Eingangssignal hat, sowie Mittel (U1A), die auf das Sägezahnsignal (V10) und den Hochspannungsimpuls ansprechen, um das Steuersignal (V17) zu erzeugen, das eine entsprechende steuerbare Phase hat, die sich mit dem Hochspannungsimpuls ändert.

7. Hochspannungsversorgung nach Anspruch 1, dadurch gekennzeichnet, daß die Phasen der ersten (V2) und zweiten (V3) Rücklaufspannung sich wenigstens teilweise überlappen.

8. Hochspannungsversorgung nach Anspruch 1, dadurch gekennzeichnet, daß die Rücklauf-Resonanzschaltung (79) eine Ablenkwicklung (L_{H}) enthält, und daß das Steuersignal (V17) eine entsprechende steuerbare Phase hat, die bewirkt, daß die Phase der zweiten Rücklaufspannung (V3) gegenüber der ersten Rücklaufspannung (V2) über einen vollständigen Regelbereich der Versorgung voreilt.

9. Hochspannungsversorgung nach Anspruch 1, dadurch gekennzeichnet, daß die Steuerschaltung (103) Mittel (R13, C10) enthält, die auf die erste Rücklaufspannung (V2) ansprechen, um ein Sägezahnsignal (V10) mit einem ansteigenden Teil (V10) zu erzeugen, und Mittel (U1A), die auf den ansteigenden Teil (V10) und auf den Hochspannungsimpuls ansprechen, um eine erste Übergangsflanke des Steuersignals zu bilden, wenn ein überschneiden des ansteigenden Signals (V10) und eines Signals (V11) erfolgt, das repräsentativ für einen Pegel des Hochspannungsimpulses ist, wodurch die relative Phase zwischen der ersten (V2) und zweiten (V3) Rücklaufspannung gesteuert wird.

10. Hochspannungsversorgung nach Anspruch 9, dadurch gekennzeichnet, daß die zweiten Schaltmittel einen Transistorschalter (Q2) mit einer Steuerelektrode (Basis), der das Steuersignal (V17) zugeführt wird und eine stromführende Haupt-Elektrode (Emitter), die mit der zweiten Resonanzschaltung (78) verbunden ist, umfaßt, und daß die Übergangsflanke den Transistorschalter (Q2) veranlaßt, nicht-leitend zu werden, um das Auftreten eines Rücklaufintervalls in der zweiten Rücklaufspannung (V3) zu bewirken.

11. Hochspannungsversorgung nach Anspruch 9, dadurch gekennzeichnet, daß die Steuerschaltung (103) Mittel (R22, C14) enthält, die mit der Rücklauf-Resonanzschaltung (79) verbunden sind, um ein Signal zu erzeugen, das relativ zu der ersten Rücklaufspannung (V2) zeitverschoben ist, daß die den Bereich begrenzenden Mittel (Q12, Q13) auf das zeitverschobene Signal und die zweite Rücklaufspannung ansprechen, um ein drittes Signal zu erzeugen, wenn wenigstens ein Teil der zweiten Rücklaufspannung während des Auftretens des zeitverschobenen Signals auftritt, daß das dritte Signal den die erste Übergangsflanke erzeugenden Mitteln (U1A) zugeführt wird, um den Zeitverlauf der ersten Übergangsflanke zu ändern und so die Steuerschaltung (103) an einem Betrieb mit positiver Rückkopplung zu hindern.

12. Hochspannungsversorgung nach Anspruch 1, dadurch gekennzeichnet, daß die erste (V2) und zweite (V3) Rücklaufspannung in Wicklungen (W2, Wb) erzeugt werden, die magnetisch getrennt sind, um den Hochspannungsimpuls (V_{SUM}) entsprechend einer Summe der ersten (V2) und zweiten (V3) Rücklaufspannung zu erzeugen.

13. Hochspannungsversorgung nach Anspruch 1, dadurch gekennzeichnet, daß die Hochspannungswicklung (W2) des Zeilenendtransformators (T1) magnetisch mit der Rücklauf-Resonanzschaltung (79) gekoppelt ist, daß eine Wicklung (Wb) eines zweiten Zeilenendtransformators (T2) magnetisch mit der zweiten Resonanzschaltung (78) gekoppelt ist, und daß die Wicklungen (W2, Wb) des ersten (T1) und zweiten (T2) Zeilenendtransformators in Reihe geschaltet sind, um über einen Anschluß (101a) einer der Windungen, der mit einem Eingangsanschluß eines Hochspannungsgleichrichters (101) verbunden ist, eine gleichgerichtete Hochspannung an einem Ausgang des Gleichrichters (101) zu erzeugen.

14. Hochspannungsversorgung nach Anspruch 13, dadurch gekennzeichnet, daß die Rücklauf-Resonanzschaltung (79) eine Ablenkwicklung (L_{H}) enthält, daß eine zweite Wicklung (W3) des Zeilenendtransformators (T1) mit einem zweiten Gleichrichter (D3) verbunden ist, der eine Spannung (V+) erzeugt, die über eine Wicklung (Wa) des zweiten Zeilenendtransformators (T2) einer stromführenden Haupt-Elektrode (Kollektor) eines Schalttransistors (Q2) zugeführt wird, der in den zweiten Schaltmitteln enthalten ist.

15. Hochspannungsversorgung nach Anspruch 1, gekennzeichnet durch einen Gleichrichter (101), dem der Hochspannungsimpuls (V_{SUM}) zur Erzeugung einer gleichgerichteten Hochspannung zugeführt wird, und durch dritte Mittel (D10, Q10) mit einem ersten Anschluß (Emitter), dem die gleichgerichtete Hochspannung (U) über eine Impedanz (R3) derart zugeführt wird, daß ein Strom (i₂), der über die Impedanz (R3) in den ersten Anschluß fließt, ein Maß für die gleichgerichtete Hochspannung ist, und um an einem zweiten Anschluß (Kollektor) der dritten Mittel ein Signal (V11) zu erzeugen, das ein Maß für die gleichgerichtete Hochspannung ist, deren Durchschnittswert im Pegel durch die dritten Mittel (D10, Q10) relativ zu einer Spannung (V_{U}) verschoben ist, die an dem ersten Anschluß (Emitter) der dritten Mittel aufgebaut wird.

16. Hochspannungsversorgung nach Anspruch 15, dadurch gekennzeichnet, daß die dritten Mittel einen Transistor (Q10) mit einer Emitterelektrode, der über einen Ableitungs-Widerstand (R3) die gleichgerichtete Hochspannung (U) zugeführt wird, und mit einer auf konstantem Spannungspegel liegenden Basis-Elektrode zur weitgehenden Konstanthaltung einer Spannung bei Änderung der gleichgerichteten Hochspannung umfassen, und daß das im Pegel verschobene Signal an seiner Kollektorelektrode erzeugt wird.

## Revendications

1. Alimentation en haute tension d'un appareil vidéo , comprenant :
une source (90) d'un signal d'entrée à une fréquence qui est reliée à une fréquence de déviation ;
un circuit résonant de retour de balayage (79) ;
un premier moyen de commutation (Q1) sensible audit signal d'entrée et couplé audit circuit résonant de retour pour créer une première tension de retour périodique, résonante (V2) qui est développée à travers un enroulement haute tension (W2) d'un transformateur de retour (T1) ;
un second circuit résonant (78) ;
un second moyen de commutation (Q2) sensible à un signal de commande (V17) et couplé audit second circuit résonant (78) pour créer à une première borne (V) dudit enroulement haute tension (W2) une seconde tension de retour périodique résonante ( V3) de phase réglable par rapport à ladite première tension de retour (V2) qui est appliquée en série à ladite première tension de retour (V2) de telle sorte qu'une impulsion haute tension (V_{SUM}) soit développée à une seconde borne (101a) dudit enroulement haute tension (W2) , ayant une amplitude qui varie en conformité avec ladite phase ; et
un circuit de commande (103) pour créer ledit signal de commande (V17) pour faire varier la phase de ladite seconde tension de retour (V3) par rapport à celle de ladite première tension d e retour (V2) ;ledit circuit de commande (103) fonctionnant dans un mode de réaction négative lorsque la caractéristique amplitude-phase de ladite impulsion haute tension (V_{SUM}) est ascendante et ledit circuit de commande (103) fonctionnant dans un mode de réaction positive lorsque ladite caractéristique amplitude-phase de ladite impulsion haute tension (V_{SUM}) est descendante ;
caractérisé en ce que ledit circuit de commande (103) comprend des moyens (Q12, Q13) sensibles à ladite seconde tension de retour (V3) et à ladite première tension de retour (V2) pour générer un signal (V19) qui limite l'étendue de ladite phase réglable afin d'empêcher ladite réaction négative de changer en réaction positive.

2. Alimentation en haute tension selon la revendication 1, caractérisé par un moyen redresseur (101) comportant une borne d'entrée (101a) qui est couplée à ladite impulsion haute tension pour produire une haute tension redressée qui est couplée à un circuit de charge dans laquelle ledit circuit de commande (103) est sensible à ladite haute tension redressée pour faire varier ladite phase de ladite seconde tension de retour (V3) selon un mode de réaction négative qui stabilise ladite haute tension redressée par une variation de courant dans ledit moyen redresseur (101).

3. Alimentation en haute tension selon la revendication 1, caractérisée en ce que ledit circuit résonant de retour (79) comprend un enroulement de déviation horizontale (L_{H}) et une capacité de retour (C_{R}).

4. Alimentation en haute tension selon la revendication 3, caractérisée en ce que ledit transformateur de retour (T1) comprend un enroulement primaire (W1) qui est couplé audit circuit résonant de retour (79) et dans laquelle ledit enroulement haute tension comprend un enroulement tertiaire (W2) dudit transformateur de retour.

5. Alimentation selon la revendication 1, caractérisé en ce que la fréquence de résonance dudit second circuit résonant (78) est inférieure à celle dudit circuit résonant de retour (79).

6. Alimentation selon la revendication 1, caractérisée en ce que ledit circuit de commande (103) comprend des moyens (Q10, C10) sensibles à ladite première tension de retour (V2) pour créer un signal en dents de scie (V10) ayant une phase constante par rapport audit signal d'entrée et un moyen (U1A) sensible audit signal en dents de scie (V10) et à ladite impulsion haute tension pour créer ledit signal de commande (V17) ayant une phase réglable correspondante qui varie en conformité avec ladite impulsion haute tension.

7. Alimentation selon la revendication 1, caractérisée en ce que les phases desdites première (V2) et seconde (V3) tensions de retour se chevauchent au moins par moment.

8. Alimentation selon la revendication 1, caractérisée en ce que ledit circuit résonant de retour (79) comprend un enroulement de déviation (L_{H}) et dans laquelle ledit signal de commande (V17) possède une phase réglable correspondante qui entraine ladite phase de ladite seconde tension de retour (V3) à conduire celle de ladite première tension de retour (V2) sur une étendue de réglage total de ladite alimentation.

9. Alimentation selon la revendication 1, caractérisée en ce que ledit circuit de commande (103) comprend des moyens (R13, C10) sensibles à ladite première tension de retour (V2) pour créer un signal en dents de scie (V10) comportant une partie en pente linéaire (V10) et un moyen (U1A) sensible à ladite partie en pente linéaire (V10) et à ladite impulsion haute tension pour former un premier bord de transition dudit signal de commande lorsqu'un croisement de ladite partie en pente linéaire (V10) et d'un signal (V11) qui est représentatif d'un niveau de ladite impulsion haute tension se produit, ce qui commande la phase relative entre lesdites première (V2) et seconde (V3) tensions de retour.

10. Alimentation selon la revendication 9, caractérisée en ce que ledit second moyen de commutation comprend un commutateur à transistor (Q2) comportant une électrode de commande (base) qui est couplée audit signal de commande (V17) et une électrode de conduction du courant principal (émetteur) qui est couplée audit second circuit résonant (78) et dans laquelle ledit bord de transition entraine ledit commutateur à transistor (Q2) à devenir non conducteur, pour amener un intervalle de retour à se produire dans ladite seconde tension de retour (V3).

11. Alimentation selon la revendication 9, caractérisée en ce que ledit circuit de commande (103) comprend des moyens (R22, C14) couplés audit circuit résonant de retour (79) pour créer un signal qui est décalé dans le temps par rapport à ladite première tension de retour (V2) , lesdits moyens de limitation d'étendue (Q12, Q13) sensibles audit signal décalé dans le temps et à ladite seconde tension de retour, produisant un troisième signal lorsqu'au moins une partie de ladite seconde tension de retour se produit pendant l'occurrence dudit signal décalé dans le temps, ledit troisième signal étant couplé audit moyen générateur du premier bord de transition (U1A) pour faire varier la synchronisation dudit premier bord de transition afin d'éviter audit circuit de commande (103) de fonctionner en mode de réaction positive.

12. Alimentation selon la revendication 1, caractérisée en ce que lesdites première (V2) et seconde (V3) tensions de retour sont produites dans des enroulements (W2, Wb) qui sont séparés magnétiquement pour produire ladite impulsion haute tension (V_{SUM}) en conformité avec une somme desdites première (V2) et seconde (V3) tensions de retour .

13. Alimentation selon la revendication 1, caractérisée en ce que ledit enroulement haute tension (W2) dudit transformateur de retour (T1) est couplé magnétiquement audit circuit résonant de retour (79), un enroulement (Wb) d'un second transformateur de retour (T2) est couplé magnétiquement audit second circuit résonant (78) et lesdits enroulements (W2, Wb) desdits premier (T1) et second (T2) transformateurs de retour sont couplés en série pour produire par l'intermédiaire d'une borne (101a) de l'un desdits enroulements qui est couplé à une borne d'entrée d'un redresseur haute tension (101), une haute tension redressée à une borne de sortie dudit redresseur (101).

14. Alimentation selon la revendication 13, caractérisée en ce que ledit circuit résonant de retour (79) comprend un enroulement de déviation (L_{H}) , un second enroulement (W3) dudit transformateur de retour (T1) etant couplé à un second redresseur (D3) qui génère une tension d'activation (V+) , ladite tension d'activation étant couplée par l'intermédiaire d'un enroulement (Wa) dudit second transformateur de retour (T2) à une électrode collectrice du courant principal (connecteur) d'un transistor de commutation (Q2) qui est inclus dans ledit second moyen de commutation.

15. Alimentation selon la revendication 1, caractérisée par un redresseur (101) couplé à ladite impulsion d'impulsion haute tension (V_{SUM}) pour générer une haute tension redressée (U) et par un troisième moyen (D10, Q10) possédant une première borne (émetteur) qui est couplée à ladite haute tension redressée (U) à travers une impédance (R3) de telle sorte qu'un courant (i₂) qui circule via ladite impédance (R3) dans ladite première borne est indicateur de ladite haute tension redressée et pour générer à une seconde borne (collecteur) dudit troisième moyen un signal (V11) qui est indicateur de ladite haute tension redressée ayant une valeur moyenne qui est décalée en niveau par ledit troisième moyen (D10, Q10) par rapport à une tension (V_{U}) qui est développée au niveau de ladite première borne (émetteur) dudit troisième moyen.

16. Alimentation selon la revendication 15, caractérisée en ce que ledit troisième moyen comprend un transistor (Q10) ayant une électrode d'émetteur qui est couplée à travers une résistance de fuite (R3) à ladite haute tension redressée (U) et possédant une électrode de base à un niveau de tension constant pour maintenir sensiblement constante une tension qui est développée au niveau de ladite électrode d'émetteur de ce transistor lorsque ladite haute tension redressée varie, et dans laquelle ledit signal décalé en niveau est produit à une électrode de collecteur de ce transistor.
